Europäisches Patentamt

European Patent Office

Office européen des brevets

(11) Veröffentlichungsnummer: **0 357 922**
**A2**

## (12) EUROPÄISCHE PATENTANMELDUNG

(21) Anmeldenummer: **89113363.9**

(22) Anmeldetag: **20.07.89**

(51) Int. Cl.5: **B60T 8/00**

(30) Priorität: **03.09.88 DE 3829949**

(43) Veröffentlichungstag der Anmeldung:
**14.03.90 Patentblatt 90/11**

(84) Benannte Vertragsstaaten:
**DE FR GB IT NL SE**

(71) Anmelder: **DAIMLER-BENZ AKTIENGESELLSCHAFT**
**Mercedesstrasse 136**
**D-7000 Stuttgart 60(DE)**

(72) Erfinder: **Maass, Manfred**
**Humboldtstrasse 2/3**
**D-7300 Esslingen(DE)**
Erfinder: **Bunke, Joachim**
**Seestrasse 27**
**D-7300 Esslingen(DE)**
Erfinder: **Flamm, Wolfgang**
**Friedrichstrasse 7**
**D-7445 Bempflingen.(DE)**
Erfinder: **Ulmann, Andreas**
**Westerbachstrasse 71**
**D-7312 Kirchheim/T.(DE)**
Erfinder: **Klein, Bodo**
**Sulzgrieserstrasse 120**
**D-7300 Esslingen(DE)**

(54) **Verfahren zum Betrieb einer elektrischen Druckmittel-Betriebsbremseinrichtung und Steuervorrichtung zur Durchführung des Verfahrens.**

(57) Es wird ein Verfahren zum Betrieb einer elektrischen Druckmittel-Betriebsbremseinrichtung vorgeschlagen, das eine hohe Zuverlässigkeit und Verfügbarkeit der Einrichtung bewirkt. Das Verfahren stützt sich auf eine vorrangig elektrisch wirkende, individuelle Ansteuerung der einzelnen Radbremsen, welche bei Vorliegen eines Fehlers oder Defekts von einer herkömmlich pneumatisch wirkenden Ansteuerung überspielt oder ersetzt werden kann. Das Verfahren bedient sich mehrerer Signalgeber zur Erfassung wesentlicher Parameter von gebremsten Rädern. Verfahrensgemäß werden mittels programmierter Prüfroutinen in Reaktionszusammenhang stehende Aussagen mehrerer Geber ausgewertet, um so im Verlaufe normalen Bremsbetriebes die Geber und ihre Signalleitungen sowie die elektrischen Ansteuerleitungen zu überwachen. Die erfindungsgemäße Vorrichtung zur Durchführung des Verfahrens beinhaltet mehrere parallel und unabhängig voneinander wirkende Sicherungsfunktionen, die eine elektrische Fehlbetätigung der Bremsen unmöglich machen. Die Sicherheit beeinträchtigende Prüfergebnisse sind in einen nichtflüchtigen Halbleiterspeicher einschreibbar, der durch gezielte Schreib-Auslösung im Vorverlaufe einer durch Bremsversagen ausgelösten Gefahrensituation auch als Daten-Logger des Versagens fungieren kann.

Fig 2

# Verfahren zum Betrieb einer elektrischen Druckmittel-Betriebsbremseinrichtung und Steuervorrichtung zur Durchführung des Verfahrens

Die Erfindung bezieht sich auf ein Verfahren zum Betrieb einer elektrischen Druckmittel-Betriebsbremseinrichtung mit den Merkmalen des Oberbegriffs des Patentanspruchs 1. Diese Merkmale sind aus der DE-OS 36 17 356 im Zusammenhang mit der dort beschriebenen elektrischen Druckmittel-Bremseinrichtung und der ihr eigenen Betriebsweise bekannt.

In jener elektrischen Druckmittel-Betriebsbremseinrichtung sind je ein Haupt- und ein Nebensteuerkreis mit Elektromagnetventilen für die Versorgung eines jeden Radbremszylinders vorgesehen. Wenigstens ein Druckgeber überwacht den Druckverlauf, um eine Auskunft über die Schaltarbeit der Ventile in mehreren Leitungszweigen zu geben. Bezüglich eines Verfahrens zum Betrieb einer solchen Bremseinrichtung bietet dies den Vorteil, daß jeder Teilbremskreis, nämlich der Haupt- und Notbremskreis, ständig kontrolliert werden kann, so daß kein Totalausfall auftreten kann. Wenn nach dem Ansteuern der das Druckmittel steuernden Ventile Druckänderungen am einem oder anderen Ventil ausbleiben, wird das von der Elektronik bemerkt. Jene Schrift behandelt insoweit Sicherheitsaspekte nur im engen Rahmen einer Überwachung des im Radbremszylinder aufbaubaren Drucks in Abhängigkeit von einem vom Fahrzeugführer gegebenen Bremsbefehl. Dabei wird also der Druckgeber selbst nicht überwacht; fiele er aus oder lieferte er ein seiner normalen Wandlungscharakteristik nicht mehr entsprechendes Signal, könnte eine unerwünschte Bremsauslösung über den Notbremskreis dauernd erfolgen.

In der Veröffentlichung "Impulse für die Bremse: Strom statt Luft in der Nutzfahrzeugbremsanlage" in "Automobilrevue Nr. 13 vom 24. März 1988, Seite 53" ist ein modernes Konzept schnell ansprechender Betriebsbremssysteme für Nutzfahrzeuge vorgestellt. Es sieht vor, Betriebsbremsen an Nutzfahrzeugen mit Luft als Druckmittel zu betreiben, jedoch die herkömmliche Ansteuerung bzw. Betriebsbremsbefehlsübermittlung mittels masse- und strömungswiderstandsbehafteter Luft durch eine solche mittels elektrischer Signale und sie leitender und verarbeitender Komponenten zu ersetzen. Dadurch kann eine gegenüber herkömmlichen Betriebsbremssystemen erheblich verkürzte Ansprechzeit erreicht werden. Durch Erfassung der Raddrehzahl als Wirkungsgröße des Bremsvorganges rückt die Möglichkeit einer Integration der individuellen Bremsansteuerung pro Rad mit einem Blockierschutz des gebremsten Rades nahe. Auf die erhöhten Sicherheitsanforderungen zur beständigen Überwachung und Prüfung sowohl elektrischer als auch pneumatischer Komponenten geht jene Veröffentlichung jedoch nicht ein; ohne weitreichende Vorkehrungen gegen Ausfall oder Fehlfunktion einzelner Komponenten einer elektrischen Druckmittel-Betriebsbremseinrichtung ist eine solche jedoch nicht einsetzbar.

Eine erste Aufgabe der Erfindung ist somit, ein Verfahren zum Betrieb einer elektrischen Druckmittel-Betriebsbremseinrichtung zu schaffen, bei dessen Durchführung eine hohe Detail- und Gesamtzuverlässigkeit einer solchen Einrichtung erreicht wird.

Diese Aufgabe wird durch das Verfahren mit den kennzeichnenden Merkmalen des Hauptanspruchs gelöst. Vorteilhafte Ausgestaltungen sind nach Lehre der Unteransprüche gegeben.

Eine zweite Aufgabe der Erfindung ist es, eine Vorrichtung zu schaffen, die sowohl die elektrischen als auch die druckmittelführenden Komponenten während des normalen Betriebes einer solchen Bremseinrichtung zu prüfen und zu überwachen erlaubt.

Diese Aufgabe wird durch die Vorrichtung mit den kennzeichnenden Merkmalen des Anspruchs 9 gelöst. Vorteilhafte Ausgestaltungen sind nach Lehre der darauf rückbezogenen Ansprüche gegeben.

Ein Vorteil des erfindungsgemäßen Verfahrens besteht darin, daß eine geringstmögliche Anzahl zusätzlicher Mittel erforderlich ist, um eine hohe Zuverlässigkeit und Verfügbarkeit einer elektrischen Druckmittel-Betriebsbremseinrichtung zu ermöglichen insbesondere dann, wenn eine solche von einem Rechner gesteuert wird. Im Falle einer rechnergesteuerten Einrichtung mit radspezifischer Bremsansteuerung, die insoweit auch mit Blockierschutzvorkehrungen ausgestattet sein kann, können dafür ohnehin vorhandene Drehzahlgeber der einzelnen Fahrzeugräder zu Prüfzwecken herangezogen werden.

Das erfindungsgemäße Verfahren und die vorgeschlagene Vorrichtung zur Durchführung desselben erlauben so durch Auswertung einer Mehrzahl von Geberdaten, etwa des Bremsdruckes, der Ventilsteuerströme und der Raddrehzahlen, eine rechnergestützte Überwachung der sicherheitswesentlichen Komponenten einer elektrischen Druckmittel-Betriebsbremseinrichtung mittels einer fest programmierten Ursache-Wirkungs-Prüfroutine im Zuge des gebrauchsgemäßen Betriebes.

Einen weiteren Vorteil bietet das erfindungsgemäße Verfahren insoweit, als auch ggfs. vorhandene Achslast- und Koppelkraftgeber zur Anpassung und Optimierung des Bremsverhaltens unter wechselnden Betriebsbedingungen zur Gewinnung verfeinerter Prüfaussagen über den Zustand der Bremseinrichtung genutzt werden können; dies führt zu einer weiteren Erhöhung der Zuverlässigkeit. Durch verfahrensgemäß dauernde Überwachung der Bremsbeläge nicht nur auf Belagserschöpfung, sondern auch auf aktuell verfügbare Restbelagsdicken kann nicht nur eine rechtzeitige Warnung bzw. Außerbetriebsetzung des Fahrzeugs ausgelöst werden. Vielmehr erlaubt das erfindungsgemäße Verfahren in Verbindung mit der Vorrichtung zur Durchführung desselben eine Zustandsüberwachung der Bremsbeläge zur selektiv gewichteten Ansteuerung der Radbremsen bei geringeren Bremsleistungsanforderungen auszunutzen, so daß alle Bremsbeläge eines Fahrzeuges annähernd gleichzeitig erschöpft werden und somit optimal aufbrauchbar und kostengünstig auswechselbar sind.

Die erfindungsgemäße Vorrichtung bietet dazu den Vorteil, daß Zustands- und Prüfparameter der gesamten Bremseinrichtung, und insbesondere Fehlermeldungen sowie Zeit- und Häufigkeit ihres Auftretens und ihre Vorgeschichte charakterisierende Größen in einen Diagnosespeicher ablegbar und anläßlich Wartung des Fahrzeugs in der Werkstatt routinemäßig wiederauslesbar sind, so daß sie dort gegebenenfalls von einem auf den Fahrzeugtyp programmierbaren Service-Analysator zu einer spezifischeren Diagnose der Bremseinrichtung aufbereitet werden können.

Ein Ausführungsbeispiel einer Betriebsbremseinrichtung zur Durchführung des Verfahrens ist in der Zeichnung dargestellt. Es zeigen:

Figuren 1a und 1b ein Funktionsschaltbild eines zweikreis angesteuerten Bremsventils mit elektrischem Vorrang;

Figur 2 eine schematische Darstellung der wesentlichen Komponenten einer elektrischen Druckmittel-Betriebsbremseinrichtung, die beispielhaft Bremsventile gemäß Figuren 1a und 1b benutzt und zur Durchführung des Verfahrens geeignet ist;

Figur 3 ein Blockschaltbild der erfindungsgemäßen Vorrichtung zur Durchführung des Verfahrens einer automatischen Selbstprüfung der Einrichtung gemäß Figur 2 im Zuge normalen Betriebes.

Der Erläuterung des erfindungsgemäßen Verfahrens ist nachfolgend die Beschreibung einer Betriebsbremseinrichtung mit der erfindungsgemäßen Vorrichtung vorangestellt.

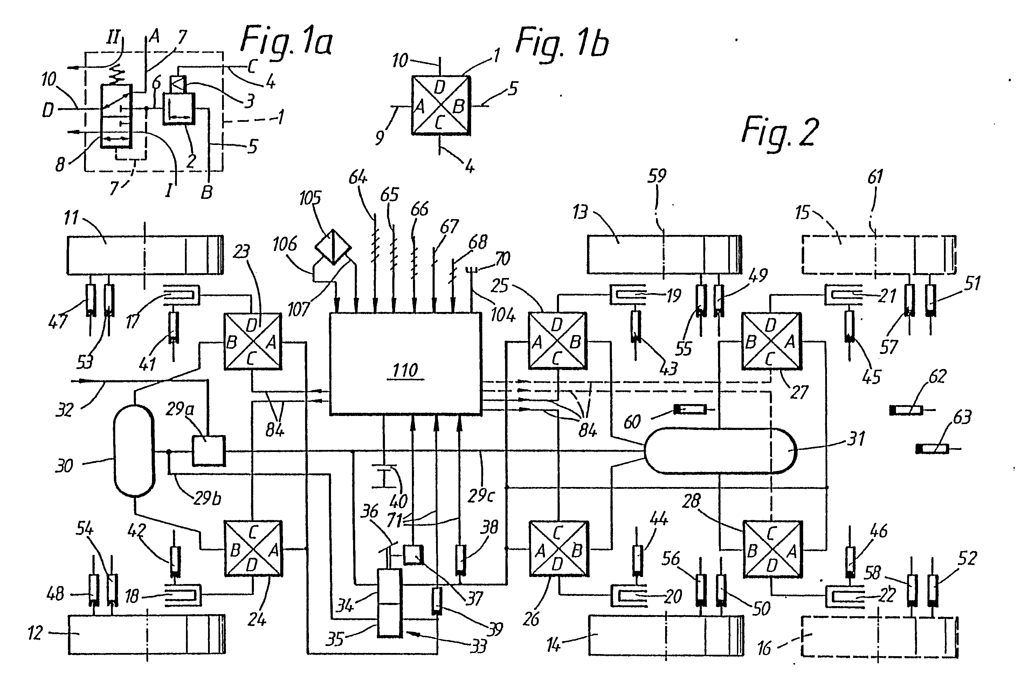

Figur 1a zeigt das Funktionsschaltbild eines neuartigen, zweikreisgesteuerten Radbremsventils mit elektrischem Vorrang, welches die Anmelderin in einer vorlaufenden Anmeldung bereits offenbart hat, und das zum verfahrensgemäßen Einsatz zusammen mit der erfindungsgemäßen Vorrichtung gut geeignet ist. Dieses Radbremsventil 1 besteht aus zwei unterschiedlichen Ventilelementen, nämlich aus einem kontinuierlich bzw. analog wirkenden Druckverhältnisventil 2 und einem nachgeschalteten, vorgesteuerten 3/2-Wegeventil 8. Das Druckverhältnisventil 2 ist mittels eines elektromagnetischen Aktuators 3 über eine elektrische Signalleitung 4 zwischen Öffnung und Schließung kontinuierlich steuerbar, beispielsweise durch einen getakteten Gleichstrom mit gemäß Betriebsdruckanforderung variablem Tastverhältnis, oder aber durch eine entsprechend veränderliche Steuergleichsplanung. Der Vorratsdruck wird über die Leitung 5 zugeführt. Der Betriebsdruck als gesteuerter Verhältnisdruck wird über eine Verbindung 6 einerseits dem ersten Wegeingang und andererseits über eine Leitung 7 dem Vorsteuereingang des Wegeventils 8 zugeführt. Der zweite Wegeingang des 3/2-Wegeventils erhält über die Leitung 9 den Pedalbetriebsdruck zugeführt; sein Ausgang 10 führt zum Radbremszylinder.

Die Vorsteuercharakteristik des 3/2-Wegeventils 8 ist so bemessen, daß es bereits bei einem sehr niedrigen Vorsteuerdruck umschaltet, d. h., die den Verhältnisdruck des Ventils 2 führende Verbindung 6 auf die Ausgangsleitung 10 durchschaltet. Auf diese Weise ist sichergestellt, daß ab einem gewissen elektrisch angesteuerten Verhältnisdruck derselbe am Ausgang 10 wirksame wird, d. h. die Druckansteuerung der Radbremsleitung 10 von der Vorratsleitung 5 aus geschieht (Steuerweg I), während bei Fehlen desselben - etwa aufgrund Defekts des Ventils 2 oder eines Leitungsbruchs - die Leitung 9 mit dem vom Bremspedal bezogene Pedalbetriebsdruck auf den Ausgang 10 durchgeschaltet wird/bleibt (Steuerweg II).

In Figur 1b ist diese Anordnung als Symbol vereinfacht wiedergegeben, wobei dem Eingang A die Pedalbetriebsdruckleitung 9, dem Eingang B die Vorratsdruckleitung 5, dem Eingang C die elektrische Steuerleitung 4 und dem Ausgang D die Radbremsleitung 10 entspricht. Im folgenden ist unter dem Begriff "Radbremsventil" beispielhaft auf eine Anordnung nach Figur 1a Bezug genommen und ein entsprechendes Radbremsventil gemäß Figur 1b symbolisch dargestellt.

Figur 2 veranschaulicht die wesentlichen Komponenten einer elektrischen Druckmittel-Betriebsbremseinrichtung, wie sie beispielhaft an einem zwei- oder dreiachsigen Nutzfahrzeug installiert sind, wobei als Druckmittel Luft Verwendung findet; die erfindungsgemäße Vorrichtung verteilt sich dabei auf mehrere Teile dieser Einrichtung. 11 and 12 sind die gelenkten Vorderräder des Fahrzeugs, 13 und 14 sind die hauptsächlich nutzbelasteten Hinterräder mit Lastachse 59; entsprechend kommen bei einem dreiachsigen Fahrzeug zwei weitere nutzbelastete Hinterräder 15 und 16 mit Lastachse 61 hinzu. Den einzelnen Rädern 11, 12, 13, 14, 15 und 16 sind jeweils folgende Teile entsprechend zugeordnet: Bremsen mit Radbremszylindern 17, 18, 19, 20, 21, 22; Bremsventile 23, 24, 25, 26, 27, 28; Geber 41, 42, 43, 44, 45 und 46 zum Erfassen des bremsbelagnahen Bremsdruckes; Raddrehzahlgeber 47, 48, 49, 50, 51, 52; Belagdicke- bzw. Bremsverschleißgeber 53, 54, 55, 56, 57, 58.

Die den Rädern zugeordneten Druck-, Drehzahl- und Verschleißgeber sind über individuelle Leitungsbündel 64, 65 und 66 mit dem elektronischen Bremssteuergerät 110 verbunden, das seinerseits über individuelle elektrische Ansteuerleitungen 84 mit Steuereingängen C der Bremsventile 23 bis 28 verbunden ist. Dieses elektronische Bremssteuergerät stellt den Kern der erfindungsgemäßen Vorrichtung dar; es wird aus einer Batterie 40 mit Strom versorgt, welche vorzugsweise nicht mit der Starterbatterie des Fahrzeugs identisch ist, wohl aber im Falle eines Ausfalles für einen überbrückenden Notbetrieb automatisch durch die Starterbatterie ersetzt werden kann.

Vom nicht gezeigten Luftkompressor kommend führt eine Speiseleitung 32 zu einem Mehrkreissicherheitsventil 29a, von dem aus über zwei Unterspeiseleitungen 29b und 29c sowohl achsnahe Vorratsbehälter 30 und 31 als auch zwei mechanisch gekoppelte, aber getrennt wirksame Ventilsektionen 34 und 35 des Betriebsbremsventils 33 mit Vorratsdruck beaufschlagt werden; in der Regel sind so wie gezeigt wenigstens zwei getrennte Vorratsbehälter und Speisekreise für Vorder- und Hinterräder bzw. -achsen vorgesehen. Das Betriebsbremsventil 33 wird vom Bremspedal 36 betätigt.

Die Ausgänge D der Bremsventile 23 bis 28 stehen über kurze Verbindungsleitungen mit den Radbremszylindern 17 bis 22 der Radbremsen in Verbindung. Vom vorderen Vorratsbehälter 30 sind Leitungen an die Vorratsdruckeinlässe B der vorderen Radbremsventile 23 und 24 geführt. Der hintere Vorratsbehälter 31 steht über entsprechende Leitungen mit den Vorratsdruckeinlässen B der hinteren Radbremsventilen 25 bis 28 in Verbindung. Der Auslaß der ersten Sektion 34 des Betriebsventils 33 ist auf die Pedalbetriebsdruckeinlässe A der hinteren Radbremsventile 25 bis 28 geführt. Der Auslaß der zweiten Sektion 35 des Betriebsventils 33 ist auf die Pedalbetriebsdruckeinlässe A der vorderen Radbremsventile 23 und 24 geführt. Den Bremsdruckausgängen der Sektionen 34 und 35 des Betriebsbremsventils 33 sind Pedalbremsdruckgeber 38 und 39 zugeordnet. Die Stellung des auf das Betriebsventil 33 wirkenden Bremspedals 36 kann von einem zusätzlichen elektrischen Stellungsgeber 37 erfaßt werden; vorgenannte Geber sind über separate Signalleitungen 71 mit dem elektronischen Bremssteuergerät 110 verbunden.

Die Einrichtung wird vervollständigt durch den nutzbelastbaren Hinterachsen 59 und 61 zugeordnete Achslastgeber 60 und 62 sowie durch einen Koppelkraftgeber 63, der ein der an einem Sattelauflieger oder an einer Anhängerkupplung wirksamen Koppelkraft entsprechendes elektrisches Signal abzugeben vermag; diese Geber sind über Leitungen 68 und 67 mit dem elektronischen Bremssteuergerät verbunden. Vom Bremssteuergerät führt noch eine Leitung 104 zu einer Diagnose-Schnittstelle 70. Außerdem ist noch ein Gefahrenmelder 105 vorgesehen, der hier über zwei unabhängige Leitungen 106 und 107 mit dem Bremssteuergerät in Verbindung steht.

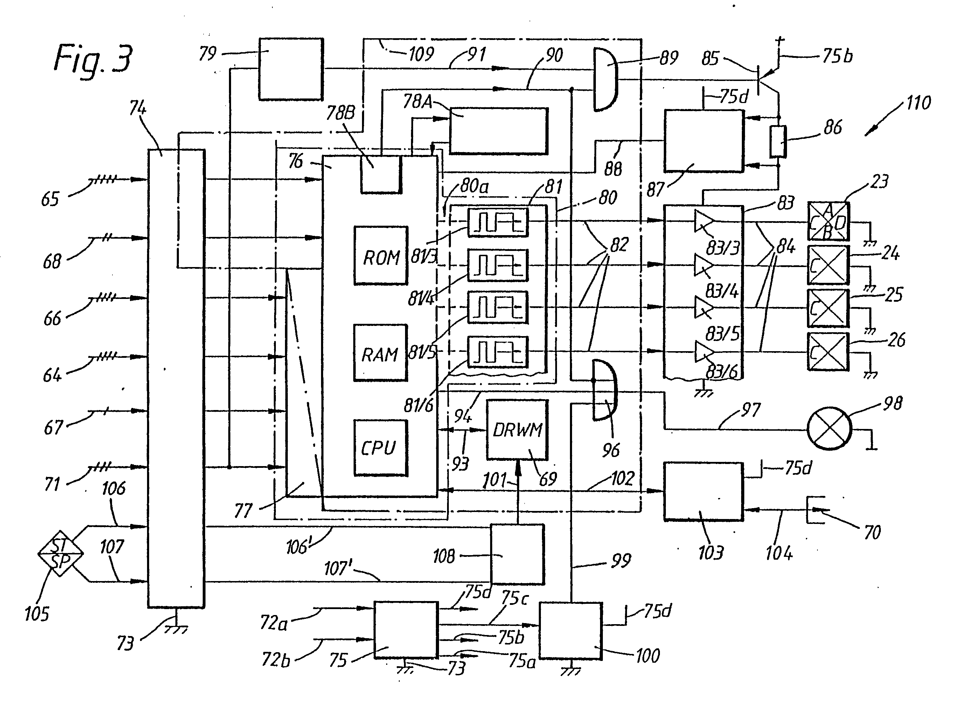

Als wesentlichen Bestandteil der erfindungsgemäßen Vorrichtung zeigt Figur 3 das elektronische Bremssteuergerät 110 in vereinfachter Blockschaltung; wenigstens der markierte Bereich 109 ist vorzugsweise rein digital wirkend realisiert. Die Signalleitungen 64 (von Radbremsdruckgebern 41 bis 46), 65 (von Drehzahlgebern 47 bis 52), 66 (von Bremsverschleißgebern 53 bis 58), 67 (vom Koppelkraftgeber 63), 68 (von Achslastgebern 60 und 62), 71 (vom Stellungsgeber 37 am Bremspedel 36 und von den Betriebsdruckgebern 38 und 39 am Betriebsbremsventil 33) und ggfs. 106 und 107 (beispielhaft von einem Gefahrenmelder 105) sind an eine Eingangsschnittstelle 74 geführt, die u.a. zahlreiche Schutzaufgaben erfüllt:
- Schutz des elektronischen Bremssteuergeräts vor Beschädigung bei statischen Masse- oder Bordnetzschlüssen auf beliebigen Eingangsleitungen;
- Schutz des elektronischen Bremssteuergeräts vor zu hohen Anschlußspannungen auf Eingangsleitungen (z. B. bei Defekt des Brems- oder Bordnetz-Spannungsreglers, bei versehentlichem Inseriesschalten einer Starter und einer Bremsbatterie, etc.);
- Schutz insbesondere empfindlicher A/D-Wandler des Rechners vor transienten Induktionsspannungen aus dem Bordnetz;
- Abfiltern hochfrequenter Störsignale und insbesondere induzierter oder masseverkoppelter Schaltspikes auf den Eingangsleitungen.

Zur Erfüllung dieser Schutzfunktionen ist die Eingangsschnittstelle 74 an das Massepotential 73 des Bremssteuergerätes 110 angeschlossen.

Da bei einem dreiachsigen Fahrzeug somit bereits 24 Signalleitungen vorhanden sein können, kann die Eingangsschnittstelle 74 zur Datenkonzentration einen Eingangs-Analog-Multiplexer enthalten, um somit z. B. zweiunddreißig mögliche Eingangskanäle auf acht oder sechzehn Analogkanäle zu komprimieren, die dann von einem nachfolgenden Mikrorechner quasi-simultan verarbeitet werden können. Dazu können z. B. Sample- und Hold-Schaltungen in der Eingangsschnittstelle 74 enthalten sein. Die für einen solchen Analog-Multiplexer erforderliche Betriebselektronik, die vorzugsweise vom Mikrorechner gesteuert oder synchronisiert sein kann, ist hier nicht ausgeführt und ist dem Fachmanne geläufig. Die Eingangsschnittstelle 74 kann auch optoelektronische Mittel enthalten, sofern Zustandssignale als Lichtsignale auf optischen Wegen, also z. B. durch lichtleitende Signalfasern, von optischen Gebern wie auch immer eingeholt werden.

Von der Eingangsschnittstelle 74 führt eine der Eingangsport-Kapazität des benutzten Mikrorechners angemessene Vielzahl von Datenleitungen zum Mikrorechner 76, der wie üblich wenigstens RAM-, ROM- CPU-Bereiche umfaßt; als hochintegrierter Einchip-Prozeß-Controller 80 ausgeführt kann er noch weitere Funktionselemente, z. B. Mittel 81 zur Assemblierung von pulsbreitenmodulierten Ausgangssignalen enthalten. Ein solches Bauelement ist z. B. der MCS 8397 von Intel. Es ist angedeutet, daß die Raddrehzahlen als Zeitinformationen unmittelbar digital einhol- und verarbeitbar sind (z. B. als Rechteckspannungen), und daß z. B. ein Beladungszustandssignal, wie es aus der Abfrage mehrerer Beladungsschalter gewinnbar ist, ebenfalls digitalen Eingängen zugeführt sein kann. Übrige Datenleitungen liegen an der Multiplex-Eingangsbank wenigstens eines A/D-Wandlers 77, der einkörperlicher Bestandteil des Mikrorechners 76 sein kann. Da die Vielzahl zu verarbeitender Signale eine hohe Wandlungsrate und schnelles Einschwingen eines solchen A/D-Wandlers erfordert, und da auch der Mikrorechner wegen der Vielzahl pro Zeiteinheit zu verarbeitender Geber-Signale eine relativ hohe Leistungsfähigkeit aufweisen muß (schneller 16- bzw. 32-Bit-Rechner), kann ein solcher A/D-Wandler 77 auch als separates Bauelement neben dem Mikrorechner 76 realisiert sein, so daß dann ein den A/D-Wandler 77 mit dem Mikrorechner 76 verbindender digitaler Datenbus (nicht angedeutet) vorzufinden ist. Ein für diesen Fall geeigneter Mikrorechner mit ausschließlich digitalen Eingängen ist z. B. der MCS 8397 bzw. MCS 8097 von Intel (mit bzw. ohne ROM).

Dem Mikrorechner 76 ist eine Watchdog-Schaltung 78A zugeordnet, die mit dem Mikrorechner 76 über einen bidirektionalen Sicherungspfad kommuniziert. Diese Anordnung überwacht den Mikrorechner kontinuierlich dahingehend, daß er im Zuge normaler Programmabwicklung während vorgesehener Zeitfenster bestimmte Zustände erreicht bzw. festliegende Status-Signale abgibt. Wird ein festgelegter Status-Zustand nicht erreicht, löst diese Schaltung eine Rücksetzung des Mikrorechners in einen Initialisierungszustand aus. Die Watchdog-Schaltung 78A kann darüber hinaus auch noch (eigene) Mittel zur Überwachung der Betriebsspannung des Mikrorechners 76 beinhalten und so beim Einschalten seiner Versorgungsspannung bzw. bei Einbrüchen derselben während normalen Betriebs ein Rücksetzsignal zum Neustart des Mikrorechners erzeugen.

Ob der Mikrorechner richtig rechnet, kann auf diese Weise nicht festgestellt werden. Hierzu ist als integraler Bestandteil des Mikrorechners ein ROM-programmiertes Selbsttest-Modul 78B vorgesehen, das in die Bremsprogrammabwicklung eingeschleift einen zyklisch sich wiederholenden Selbsttest durchzuführen vermag, welcher alle wichtigen Funktionen und Operationen des Mikrorechners nacheinander beansprucht. Nur solange dieses Testprogramm in der Art einer Prüfrechnung mit vorbekannt abgespeicherten Ergebnissen richtig ausgeführt wird, d. h. solange kein latenter Defekt des Rechners zu einem falschen Ergebnis führt, verbleibt der vom Selbsttest-Modul 78B angesteuerte Ausgang 90 des Mikrorechners 76 beispielsweise auf "High" gesetzt (Ohne Beschränkung der Allgemeinheit kann - je nach Prozessortyp -auch der komplementäre Pegel vereinbart sein).

Vom eigentlichen Mikrorechner 76 führt ein digitaler Signalpfad 80a zu einer Vielzahl (Bank) individueller, jeweils einem Radbremsventil zugeordneter Pulsbreitenmodulatoren 81/3, 81/4, etc.. Sofern der Mikrorechner 76 zusammen mit geeigneten Mitteln 81 zur Assemblierung pulsbreitenmodulierter Signale auf einem einzigen Halbleiterchip integriert ist, ist dieser Signalpfad in der Regel unzugänglich. Einer solchen Ausbildung trägt die Strichelung der aneinander angrenzenden Berandungen des eigentlichen Rechners 76 und der Bank 81 von Pulsbreitenmodulatoren symbolisch Rechnung. Jeder einzelne Pulsbreitenmodulator setzt die vom Mikrorechner für die betreffende Radbremse digital assemblierten Bremsbefehlsworte in einen Puls um, der über die jeweils entsprechende Treiberleitung 82 einer betreffenden Ventiltreiberstufe 83/3, 83/4, etc. im Endstufenmodul 83 zugeführt wird. Diese Ventiltreiberstufen erzeugen dann ihren eingegebenen Tastverhältnissen entsprechende kontinuierliche oder getaktete Ansteuerströme für die Radbremsventile 23, 24, etc., die denselben über elektrische Steuerleitungen 84 zugeführt werden.

Um eine Fehlbetätigung der Bremsen bei Rechnerausfall zu vermeiden, werden die über Leitungen 71 eingeholten Quittungssignale vom Bremspedalstellungsgeber 37 bzw. von den Betriebsdruckgebern 38 und 39 am Betriebsbremsventil 33 nach Durchlaufen der Eingangsschnittstelle 74 abgegriffen und einer Betätigungserkennungseinrichtung 79 zugeführt, die erstens Betätigung des Betriebsbremsventils 33 (Ansprechen der Geber 37, 38, 39) und zweitens Plausibilität der aus der Betätigung sich ableitenden Quittungssignale auf den Leitungen 71 verifiziert. Sind beide Kriterien zugleich erfüllt, gibt diese Einrichtung beispielsweise ein "High"-Signal an ihrem Ausgang ab. Dieser Ausgang 91 und der Ausgang 90 des Selbsttest-Moduls 78B sind als Eingangszustände an eine konjunktive Verknüpfung 89 geführt, die bei Erfülung einer Eingangskonjunktion (Pedalbetätigung plausibel erkannt und letzter Software-Selbsttest des Mikrorechners positiv) einen elektronsichen Schalter 85, etwa einen Leistungs-Feldeffekttransistor, durchschaltet, so daß über dessen Schaltstrecke und über einen Stromfühlwiderstand 86 das Endstufenmodul 83 mit Strom versorgt werden kann.

Am Stromfühlwiderstand 86 ist eine stromproportionale Prüfspannung abgeifbar, die einer Treiber- und Ventilüberwachungsschaltung 87 zuführbar ist. Diese enthält beispielsweise eigene A/D-Wandlungsmittel, die eine hinreichend genaue und schnelle Klassifikation der betreffenden Ventilströme erlauben. Es kann sich bei solchen A/D-Wandlungsmitteln um einen Vielstufen- oder Fensterkomparator oder um einen sehr schnellen Flash-A/D-Converter handeln, so daß dann jeder Taktzylkus eines jeden Ventils sensiert werden kann, wenn z. B. die Ventile mit Zeitversatz getaktet werden. Über die Ausgangleitung 88 wird das - vorzugsweise entsprechend aufbereitete bzw. quantisiert ausgewertete - Stromsignal an den Mikrorechner 76 abgegeben.

Die Spannungsaufbereitung 75 ist mit der Fahrzeugmasse 73 verbunden und bezieht wenigstens eine erste Batteriespannung $U_{Batt1}$ über eine Leitung 72a. Die Spannungsaufbereitung 75 kann elektronische Umschaltmittel enthalten, die bei Ausfall der Batteriespannung $U_{Batt1}$ von einer Bremsbatterie eine Notversorgung des elektronischen Bremssteuergerätes aus einer zweiten Leitung 72b mit einer zweiten Batteriespannung $U_{Batt2}$ erlaubt, beispielsweise der Bordspannung bzw. der Spannung der Starterbatterie des Fahrzeugs. Die Spannungsaufbereitung 75 stellt an einer ersten Versorgungsschiene 75a die Betriebsspannung des Rechners und zugeordneter Schaltungsteile und an einer zweiten Versorgungsschiene 75b die Betriebsspannung für die Radbremsventile zur Verfügung; dazu wird der elektronische Schalter 85 von dieser Versorgungsschiene mit Spannung versorgt. Außerdem gibt die Spannungsaufbereitung noch über eine Leitung 75c Zustandssignale an eine Spannungsüberwachungsstufe 100 ab, etwa bei abgefallener Versorgungsspannung auf der Leitung 72a, Ausfall der Bremsbatterie, Notversorgung aus der Leitung 75b, etwa von der Starterbatterie des Fahrzeugs, etc.. Ein weiterer besonderer Ausgang 75d kann vorgesehen sein, um vorzugsweise den Speicher 69 und übrige Teile des Bremssteuergerätes mit Strom zu versorgen.

Der Ausgang 90 des Selbsttest-Moduls 78B ist - ggfs. geeignet invertiert - an den Eingang einer Verknüpfung 96 geführt, welche eingangsseitig auch noch von einem besonderen Ausgang 94 des Mikrorechners ein Diagnosesignal erhält. Dieses repräsentiert ein Auswertungsergebnis des Mikrorechners bei Vorliegen eines Systemdefekts außerhalb des Mikrorechners, d. h. bei sowohl fehlerlosem Watchdog-Betrieb desselben als auch "High"-Zustand am Ausgang 90 des Selbsttest-Moduls 78B, womit dieser aus zyklisch erfolgreicher Testprogrammabwicklung Fehlerlosigkeit des Mikrorechners quittiert.

Bei einem solchen Systemdefekt kann es sich also z. B. um einen ausgefallenen Radbremsdruck- oder Drehzahlgeber, ein nicht druckansprechendes Radbremsventil, eine defekte Ventilerregerwicklung, eine defekte Ventiltreiberstufe im Endstufenmodul 83, etc. handeln. Über eine weitere Eingangsleitung 99 wird besagter Verknüpfung 96 noch ein Spannungsüberwachungssignal der vorerwähnten Spannungsüberwachungsstufe 100 zugeführt. Über eine Leitung 97 ist die Verknüpfung 96 ausgangsseitig mit einem vorzugsweise im Fahrerhaus installierten Warnsignalgeber 98 verbunden, der bei Vorliegen wenigstens eines Ansteuersignals am Eingang der Verknüpfung 96 betätigbar ist.

Es ist noch ein elektrischer Speicher 69 vorgesehen, dem vom Mikrorechner 76 Diagnosedaten nichtflüchtig eingeschrieben werden können. Eine Diagnosesteuereinrichtung 103, die über eine Verbindung 102 mit dem Mikrorechner 76 kommuniziert, kann ferner über eine Diagnoseleitung 104 Diagnosedaten aus diesem Speicher 69 an die Diagnose-Schnittstelle 70 und ein daran anschließbares Werkstattgerät auslesen. Der vorzugsweise als elektrisch lösch-, schreib- und lesbar ($E^2$-PROM) ausgeführte Halbleiter-Speicher (Diagnostic Read-Write Memory, DRWM) 69 kann insbesondere mit Prüf-und Fehlerdaten geladen werden.

Der Diagnose-Speicher 69 kann ausschließlich vom Mikrorechner 76 aus betrieben werden; ein entsprechendes Ladeprogramm zum Einschreiben besagter Daten kann insoweit z. B. als Maske im ROM-Bereich des Mikrorechners 76 fest abgelegt sein. Der Diagnose-Speicher 69 kann aber auch einen eigenen Mikrorechner mit Echtzeituhr und gepufferter Stromversorgung umfassen, der den eigentlichen Halbleiterspeicher lädt und verwaltet und z. B. in mehrere Bereiche aufteilt, in denen unterschiedliche Daten ablegbar sind. Solche Bereiche können auch hardwaremäßig festliegend ausgebildet sein.

In wenigstens einen Teilbereich des Speichers 69 können aufgetretene Fehlerzustände mit Betriebsparametern und Datum und Uhrzeit eingeschrieben werden. Ein entsprechender Speicherbereich kann so die Funktion einer Langzeit-Protokollierung aufgetretener Fehler erfüllen. Einem anderen Speicherbereich kann in der Art eines sehr großen Schieberegisters die Funktion eines Fehlertransientenrecorders mit definiertem bzw. definiert beeinflußbarem Zeittakt zugewiesen sein, dessen Einlesung von einer Startschaltung (ST) der Gefahrenerkennungsschaltung 105 auslösbar ist. Bei Ereignis eines Umfalles kann eine Stopschaltung (SP) der Gefahrenerkennungsschaltung 105 über eine besondere Schalteinrichtung 108 und deren Steuerverbindung 101 mit dem Speicher 69 das Einlesen von Fehlerzuständen samt Betriebsparametern und Zeitdaten in den besagten Speicherbereich unterbrechen und denselben als im Gerät nicht mehr in Betrieb setzbar isolieren. Dazu ist die Schalteinrichtung 108 über Steuerleitungen 106' und 107' mit der Eingangsschnittstelle 74 verbunden.

Wird das entsprechende Steuergerät z. B. plombiert verschlossen und der entsprechende Speicherbereich steckbar ausgeführt, kann dieser so die Funktion eines Daten-Loggers zur Erfassung von Unregelmäßigkeiten oder Bremssystemdefekten vor Ereignis eines Umfalles übernehmen. Der betreffende Speicher kann hernach geborgen werden und kann dann die systemanalytische Rekonstruktion der Gefahren-bzw. Unfallanbahnung und des Gefahren- bzw. Unfallereignisses sehr einfach erlauben. Da ein entsprechender Speicherbaustein sehr klein ist, eine sehr geringe Masse besitzt und bei geeigneter Ausführung sogar Beschleunigungen widerstehen kann, wie sie allenfalls bei einer Explosion der Ladung eines Nutzfahrzeuges überhaupt auftreten können, ist durch Vorsehung eines solchen auswechselbaren Speicherbereichs ein Daten-Logger zur Aufzeichnung der Entwicklung gefährlicher Bremssystemdefekte und unzulässiger Bremszustände eines damit ausgerüsteten Fahrzeugs äußerst zuverlässig und sehr preiswert realisierbar.

Das erfindungsgemäße Verfahren zum Betrieb einer elektrischen Druckmittel-Betriebsbremseinrichtung leistet die Überprüfung des Steuergerätes 110 in funktionalem Zusammenwirken mit externen Teilen, und damit vorzugsweise während normalen Betriebes. Hohe Eigensicherheit wird erzielt, indem neben der Selbstüberwachung des Mikrorechners, Überwachung der Stromversorgung, Freigabe der Ventilansteuerung bei Fehlerfreiheit des Mikrorechners und Plausibilität der Bremsbetätigung durch den Fahrzeugführer eine kontinuierliche Prüfung aller Geber und ihrer Signalleitungen zum Steuergerät 110 erfolgt. Dies geschieht mittels eines dem Bremsprogramm überlagerten Prüfprogrammes. Vorteilhafterweise kann das Prüfprogramm dazu Testparameter aus dem Halbleiterspeicher 69 beziehen, die dort fahrzeugspezifisch in einem schreibgeschützten Bereich niedergelegt sind und bei Bedarf jeweils in den Speicherbereich des Mikrorechners 76 kopiert werden können.

Verfahrensgemäß geschieht die Prüfung der Drehzahlgeber 47 bis 52 im Zuge normalen Bremsbetriebs durch kontinuierlichen Plausibilitätsvergleich der individuellen Raddrehzahlsignale untereinander sowie von Änderungen derselben in Abhängigkeit von Drucksignalen zugehöriger Radbremsdruckgeber 41 bis 46.

Weiter ist zur Prüfung der Radbremsdruckgeber 41 bis 46 verfahrensgemäß vorgesehen, daß entweder im Zuge normalen Bremsbetriebes oder während besonderer Prüfansteuerphasen sich sequentiell einstellende Ventilansteuerströme als kausale Betätigungsursachen und entsprechende Radbremsdrucksignale als Betätigungswirkungen überwacht werden. Beispielsweise kann eine definierte Prüfansteuerung der Radbremsventile während Bremsmanövern geringer Bremsleistung ins normale Bremsprogramm eingeblendet oder diesem überlagert werden.

Zur Prüfung der Betriebsdruckgeber 38 und 39 am Betriebsbremsventil 33 sieht das erfindungsgemäße Verfahren die kontinuierliche Durchführung des erwähnten Plausibilitätsvergliechs der Signale dieser Geber und des Stellungsgebers 37 am Bremspedal 36 vor. In Verbindung damit wird die ordnungsgemäße Druckabstufungscharakteristik der beiden Sektionen 34 und 35 des Betriebsbremsventils 33 -und damit dessen Fehlerfreiheit - kontinuierlich überwacht. Zu diesem Zweck werden die Ausgangssignale der Betriebsdruckgeber 38 und 39 mit Schwellwertfunktionen zusätzlich verglichen dahingehend, daß sie innerhalb vorgegebener Toleranzschranken in einem bestimmten Verhältnis zueinander stehen. Mit einer bestimmten Stellung des Pedalstellungsgebers 37 plausible Drucksignale der Radbremsdruckgeber 41 bis 46 lassen so unmittelbar auf einen Defekt wenigstens eines der Betriebsdruckgeber 38 und 39 schließen. Verfahrensgemäß wird umgekehrt der Stellungsgeber 37 am Bremspedal 36 durch eine reziproke Plausibilitätskontrolle überwacht, der entsprechende Schwellbewertungen der Signale der Betriebsdruckgeber 38 und 39 am Betriebsbremsventil 33 und der Radbremsdrucksensoren 41 bis 46 zugrundeliegen.

Verfahrensgemäß geschieht die Überprüfung des Koppelkraftgebers 63 auch im Zuge normalen Bremsbetriebes durch Erfassung der von den Radbremsdruckgebern 41 bis 46 eingeholten Radbremsdrücke und/oder der Ansteuerströme der Radbremsventile und Inbezugsetzung derselben mit dem Zeitverlauf des Koppelkraftsignals. Im Zuge der entsprechenden Signalverarbeitung ist vorgesehen, das Koppelkraftsignal wahlweise einer Differenzierfunktion zu unterwerfen, so daß es z. B. direkt und in differenzierter Form parallelverarbeitet werden kann.

Verfahrensgemäß können in einem Kennfeld des Mikrorechners 76 oder in einem löschgeschützten Bereich des separaten Halbleiterspeichers 69 Parameter abgelegt sein, die eine ordnungsgemäße Vorbremscharakteristik eines Anhängers oder Sattelaufliegers beschreiben. Mit ihrer Hilfe kann auch im Koppelbetrieb aus Bremsursachgrößen (Ventilsteuerströme oder Radbremsdrücke) ein zu erwartender Koppelkraftverlauf näherungsweise berechnet und mit dem tatsächlichen verglichen werden. Hierzu kann das Prüfprogramm zwei Schritte aufweisen.

Beispielsweise können in einem ersten Schritt alle Radbremsdrücke - unabhängig davon, ob durch elektrische Ansteuerung aufgebaut oder vom Betriebsbremsventil bezogen -als Ursachengrößen zu dem Koppelkraftsignal in Bezug gesetzt werden.

In unmittelbarer Folge können dann in einem zweiten Schritt statt der Radbremsdrucksignale die entsprechenden Ansteuerströme der Radbremsventile als Ursachengrößen mit dem Koppelkraftsignal als Wirkungsgröße auf Plausibilität verglichen werden.

Bei der Bewertung der Ursache für das Auftreten einer bremsbedingten Koppelkraft können so zunächst Radbremsen ausgeschlossen werden, die wegen Ausfalls ihrer elektrischen Ansteuerung warum auch immer mit dem ersatzhalber vom Betriebsbremsventil 33 bezogenen Betriebsbremsdruck betrieben werden oder deren Radbremsdruckgeber nicht anspricht. Durch Plausibilitätsoder Grenzwertvergleich der Ergebnisse beider Prüfschritte ist dadurch eine die Betriebssicherheit steigernde Überprüfung des Koppelkraftgebers 63 auch dann möglich, wenn wahlweise einzelne Ansteuerkreise oder Radbremsdruckgeber ausgefallen sind.

Im Prüfprogramm kann dem Prüfzyklus "Koppelkraftgeber" der Prüfzyklus "Radbremsdruckgeber und elektrische Ansteuerung der Radbremsventile" vorgeschaltet werden. Es kann dann durch Ausnahme von der Bewertung der Drucksignale solcher Radbremsen, die nicht durch elektrische Ansteuerung betätigt sind (Fall des mechanischen Ausfalls des Verhältnisdruckventils 2 eines Radbremsventils 1), vermieden werden, daß die Auswertungsfunktion für die Koppelkraft abflacht.

Verfahrensgemäß geschieht auch die Prüfung vorhandener Achslastgeber 60 und 62 im Zuge normalen Bremsbetriebes; sie geschieht durch Reaktionsabfrage der Achslastgeber bei starkem Bremsen. Bezogene Ursachengrößen können dabei Radbremsdrücke oder Ventilansteuerströme für eine starke Bremsung sein. Eine gleichzeitige Einbeziehung und Auswertung der Raddrehzahlsignale bei starker Bremsung in diese Auswertung versteilert ihre Plausibilitätsaussage.

Auch die Bremsbelagverschleißgeber 53 bis 58 werden verfahrensgemäß im Zuge normalen Bremsbetriebes kontinuierlich überprüft. Dazu ist eine Speicherung von Bremsdaten (Bremsdruck, Bremszeit) im nichtflüchtig schreibbaren Diagnosespeicher 69 vorgesehen. Die Bremsbelagsverschleißgeber können z. B. einen Widerstand oder ein Widerstandsnetzwerk beinhalten, das seinen Widerstand über zunehmendem Verschleiß charakteristisch verändert. Zur Erfassung des Verschleißes können sie mit einem Prüfstrom beaufschlagt werden; die als Wirkung jeweils abgreifbare Spannung kann zur Auswertung in verschiedene Bereiche klassifiziert werden, so daß das Erreichen eines spezifischen Spannungsbereiches entweder die Bremsbelagserschöpfung oder einen Defekt des Verschleißgebers (z. B. Kurzschluß oder Unterbrechung) kennzeichnet. Solche Geber können auch mit zusätzlichen niederohmigen Vorwiderständen in ihren spannungsführenden Zuleitungen ausgestattet sein, welche durch Beaufschlagung mit einem definierten Prüfstrom bzw. einer definierten Prüfspannung das Nichtvorhandensein von Kurzschlüssen bzw. Unterbrechungen der Widerstandselemente der Geber zu erkennen erlauben. Für die Bereitstellung entsprechender Prüfspannungen bzw. -ströme kann die Eingangsschnittstelle 74 im Bremssteuergerät 110 besondere Versorgungsmittel enthalten, die vom Rechner 76 aktivierbar sind.

Die Überprüfung der die Gebersignale übermittelnden Signalleitungen 64 bis 68 und ihre Verbindungs- bzw. Anschlußstellen am Bremssteuergerät erfolgt verfahrensgemäß zusammen mit den vorerwähnten Gebern; ein Leitungsdefekt wird dabei als Geberdefekt bewertet und als solcher im nichtflüchtig schreibbaren Halbleiterspeicher 69 abgelegt.

Neben den Gebern als äußersten Bestandteilen der Vorrichtung werden übrige elektrischen Komponenten außerhalb des Mikrorechners 76 und seiner Eingangsschnittstelle 74 als innerster Bestandteil der Vorrichtung auch durch Plausibilitätsvergleiche überprüft; diese erfassen insbesondere die Pulsbreitenmodulatoren 81, Treiberleitungen 82, die Ventiltreiberstufen 83/3, 83/4 etc. im Endstufenmodul 83, aber auch die Ventilsteuerleitungen 84 und Magnetwicklungen der Radbremsventile 23 bis 28.

Entsprechende Überprüfungen stützen sich vorzugsweise auf eine Überwachung des in das Endstufenmodul 83 einspeisbaren Stromes als Ursache des elektrischen Ansprechens der Bremsen bzw. einer Verringerung der Raddrehzahlen. Eine elektrische Fehlansteuerung der Radbremsventile (etwa durch einen Defekt in einem Pulsbreitenmodulator oder einer Endstufe) wird verfahrensgemäß durch vorerwähnte Auswertung der Radbremsdrücke oder Überwachung des in das Endstufenmodul 83 einspeisbaren Stromes erkannt. Die Aufrechterhaltung einer solchen Fehlansteuerung wird durch Abschaltung des Versorgungsstromes des Endstufenmoduls 83 durch Sperrung des Halbleiterschalters 85 vermieden. Die kontinuierliche Erfassung der Radbremsdrücke unabhängig von ihren Ansteuerursachen (elektrisch oder pneumatisch) leistet im Zusammenwirken mit der verfahrensgemäß elektrisch und pneumatisch redundanten (37, 38, 39) Überwachung des Betriebsbremsventils 33 und der Stellung des betätigenden Bremspedales 36 auch eine elektrische Sicherheitsüberwachung der pneumatischen Kreise dahingehend, daß bei nichtbetätigtem Bremspedal fehlerhaft auftretende Radbremsdrücke auch bei nichtelektrischer Auslösung zu einem Fehlersignal auswertbar sind.

Wird bei einer der verfahrensgemäßen Prüfroutinen ein Fehler erkannt, wird vom Mikrorechner 76 über die Eingangsleitung 94 die Verknüpfung 96 mit einem Fehlerstatussignal beaufschlagt. Da die Verknüpfung 96 eingangsseitig über die Leitungen 90 und 99 auch Fehlersignale aus der vom Selbsttest-Modul 78B durchgeführten Überprüfung des Rechners bzw. von der Spannungsüberwachung 100 erhält, kann bei Fehlern im elektrisch/elektronischen System der Bremseinrichtung über die Ausgangsleitung 97 die Warneinrichtung 98 betätigt werden, um den Führer des Fahrzeugs zu veranlassen, Art und Zustandekommen der vorliegenden Warnursache in einer Service-Station über die Diagnose-Schnittstelle 70 auslesen zu lassen.

## Ansprüche

1. Verfahren zum Betrieb einer elektrischen Druckmittel-Betriebsbremsvorrichtung mit wenigstens einer Druckmittelquelle und eine Mehrzahl von Radbremszylindern vorgeordneten und von einer mehrkreisigen Betriebsbremseinrichtung aus steuerbaren Elektromagnetventilen, welche an die von der Betriebsbremseinrichtung angesteuerten Kreise angeschlossen sind, und wobei bei jeder Bremsung von der wenigstens einen Druckmittelquelle neben einer vorrangig elektrisch dosierbaren Druckmitteleinsteuerung in einen Hauptweg (I) von derselben Quelle auch in einen Nebenweg (II) Druckmittel zur alternativen Beaufschlagung der Radbremszylinder mittelbar bereitstellbar ist,
**dadurch gekennzeichnet,**
daß die vorrangig elektrisch dosierbare Druckmitteleinsteuerung über besagte Elektromagnetventile nach Maßgabe der Ausgangssignale einer Mehrzahl von Gebern von einem elektronischen Steuergerät mit Mikrorechner und nichtflüchtigem Speicher bewirkt wird und daß das elektronische Steuergerät im Zuge normalen Steuerungsablaufes Gebersignale untereinander und mit in die Elektromagnetventile eingespeisten Ansteuerströmen nach Maßgabe eines fest gespeicherten und kontinuierlich und bei Bremsbetätigung im wesentlichen gleichzeitig mit dem Bremsprogramm ablaufenden Prüfprogramms vergleicht.

2. Verfahren nach Anspruch 1,
**dadurch gekennzeichnet,**
daß vom elektronischen Steuergerät außer den innerhalb des Steuergerätes erfaßten Ansteuerströmen der Elektromagnetventile wenigstens Signale von Radbremsdruckgebern und wenigstens einem weiteren Geber zur Erfassung des vom Betriebsbremsventil ausgangsseitig abgegebenen Bremsdruckes sowohl zur Steuerung des an die Radbremsen übermittelten Bremsdruckes als auch zur Selbstprüfung der Bremsvorrichtung ausgewertet werden.

3. Verfahren nach Anspruch 2,
**dadurch gekennzeichnet,**
daß zusätzlich wenigstens ein weiteres Signal eines Gebers im elektronischen Steuergerät ausgewertet wird, das von der Stellung des Bremspedals bzw. des Betriebsbremsventils abgeleitet ist.

4. Verfahren nach Anspruch 2,
**dadurch gekennzeichnet,**
daß zusätzlich Signale wenigstens einer Art folgender Geber im elektronischen Steuergerät ausgewertet werden:
- Raddrehzahlgeber
- Bremsverschleißgeber
- Koppelkraftgeber
- Achslastgeber.

5. Verfahren nach einem der vorhergehenden Ansprüche,
**dadurch gekennzeichnet,**
daß in wenigstens einem der folgenden Fälle:
- negative Plausibilitätsprüfung empfangener Gebersignale;
- negatives Ergebnis eines Selbsttestprogrammes des Mikrorechners;
- Einspeisung eines Ventilansteuerstromes ohne Vorliegen eines plausiblen Anforderungssignals von dem wenigstens einen Geber am Betriebsbremsventil und/oder Bremspedal
die Stromversorgung zu den Ventiltreiberstufen unterbrochen wird.

6. Verfahren nach einem der vorhergehenden Ansprüche,
**dadurch gekennzeichnet,**
daß im elektronischen Steuergerät die Ventilansteuerströme einzelner Elektromagnetventile durch zeitversetzte Taktung erfaßt werden.

7. Verfahren nach Anspruch 5,
**dadurch gekennzeichnet,**
daß Ursachen für einen der genannten Fälle selbsttätig in den nicht flüchtigen Speicher eingeschrieben werden, welcher über eine Diagnoseeinrichtung auslesbar ist.

8. Verfahren nach Anspruch 7,
**dadurch gekennzeichnet,**
daß Signale aus einer Gefahrenerkennungsschaltung Steuerungsmittel des nichtflüchtigen Speichers so beeinflussen, daß der nichtflüchtige Speicher wenigstens für die Dauer des Vorhandenseins eines solchen Signals als Datenlogger wirkt.

9. Steuervorrichtung zur Durchführung des Verfahrens zum Betrieb elektrischer Druckmittel-Bremsen nach einem der vorhergehenden Ansprüche,
**dadurch gekennzeichnet,**
daß die mittelbare Bereitstellung von Druckmittel über ein wenigstens der einen Druckmittelquelle (30, 31) nachgeschaltetes Betriebsbremsventil (34, 35, 33) erfolgt;
daß einem gemäß Fahrerwunsch betätigbaren Element (36) ein Stellungsgeber (37) und wenigstens einem Betriebsdruckausgang des von diesem Element beeinflußbaren Betriebsbremsventils (34, 35; 33) ein Betriebsdruckgeber (38, 39) zugeordnet sind;
daß jedem Radbremszylinder (17 bis 22) ein Radbremsdruckgeber (41 bis 46) zugeordnet ist;
daß ein elektronisches Bremssteuergerät (110) vorgesehen ist, welches mit vorerwähnten Gebern durch Strom oder elektromagnetische Wellen leitende Signalwege (71; 64) verbunden sind, und von welchem die Elektromagnetventile (23, bis 28) über jeweils entsprechende Leitungen (48) ansteuerbar sind, und wobei das Bremssteuergerät (110) umfaßt: einen Mikrorechner (76) mit wenigstens einem eingangsseitigen Analog/Digital-Wandler (77) und vorgeschalteter Schnittstelle (74) zur Erfassung der Signale vorgenannter Geber; einen Prüfausgang (90) des Mikrorechners, der bei fehlerloser Abwickelbarkeit eines fest gespeicherten Selbsttestprogrammes auf einen vorbestimmten logischen Pegel setzbar ist;
rechnerausgangsseitige Mittel (81; 81/3 bis 81/8) zur Abgabe von einzelnen Ventilen individuell zugemessenen plusweitenmodulierten Steuersignalen;
ein Endstufenmodul (83) mit einer Vielzahl ansteuerbarer Radbremszylinder entsprechenden Vielzahl von Ventiltreiberstufen (83/3 bis 83/8), die mit entsprechenden Erregerspulen der Elektromagnetventile (23 bis 28) verbunden (84) sind; eine Bremspedalbetätigungserkennungseinrichtung (79) und eine konjunktive Verknüpfung (89), welche eingangsseitig wenigstens von einem Ergebnissignal der Bremspedalbetätigungserkennungseinrichtung (79) und von besagtem Selbsttest-Prüfausgang (90) des Mikrorechners ansteuerbar ist;
einen Halbleiterschalter (85), dessen Steuereingang mit dem Ausgang vorerwähnter Verknüpfung (89) verbunden ist und über den besagtem Endstufenmodul (83) Strom zuführbar ist; einen in den schaltbaren Betriebsstrompfad des Endstufenmoduls (83) eingefügten Stromfühlwiderstand, an dem eine stromproportionale Prüfspannung abgreifbar ist; eine Erfassungs- bzw. Auswerteeinrichtung (87), welcher diese stromproportionale Prüfspannung zuführbar und deren Ausgang (88) mit dem Mikrorechner (76) verbunden ist.

10. Vorrichtung nach Anspruch 9,
**dadurch gekennzeichnet,**
daß zusätzlich jedem bremsbaren Rad Geber (47 bis 52) zur Erfassung der individuellen Raddrehzahlen zugeordnet sind.

11. Vorrichtung nach Anspruch 9,
**dadurch gekennzeichnet,**
daß zusätzlich eine distributive Verknüpfung (96) vorgesehen ist,
daß der erste Eingang dieser Verknüpfung mit dem Selbsttest-Prüfausgang (90) des Mikrorechners (76) verbunden ist,
daß der zweite Eingang dieser Verknüpfung mit einem weiteren Digitalausgang (94) des Mikrorechners (76) verbunden ist,
daß an wenigstens einem dritten Eingang (99) dieser Verknüpfung noch ein weiteres Fehlersignal zuführbar ist, und daß der Ausgang dieser Verknüpfung mit einer Warneinrichtung (98), vorzugsweise einer Anzeigeeinrichtung, verbunden (97) ist.

12. Vorrichtung nach Anspruch 11,
**dadurch gekennzeichnet,**
daß besagter dritter Eingang (99) der Verknüpfung (96) mit dem Ausgang einer Schaltungsanordnung (100) zur Überwachung der Betriebsspannung(en) des Bremssteuergerätes (110) verbunden ist.

13. Vorrichtung nach Anspruch 9,
**dadurch gekennzeichnet,**
daß eine Watchdog-Schaltung (78A) vorgesehen ist, mit welcher der Mikrorechner (76) über eine bidirektional wirksame Verbindung gekoppelt ist, und durch welche der Mikrorechner in Abhängigkeit des Erreichens oder Nichterreichens wenigstens eines vorbestimmten logischen Zustandes rücksetzbar ist.

14. Vorrichtung nach Anspruch 13,
**dadurch gekennzeichnet,**
daß die Watchdog-Schaltung (78A) Mittel zur Überwachung der Betriebsspannung des Mikrorechners (76) beinhaltet, und daß der Mikrorechner bei Vorliegen einer unzulässigen Betriebsspannung für einen Neustart rücksetzbar oder durch periodische Dauerrücksetzung außer Betrieb haltbar ist.

15. Vorrichtung nach Anspruch 9,
**dadurch gekennzeichnet,**
daß das elektronische Bremssteuergerät (110) einen nicht flüchtigen Speicher (69), vorzugsweise in Form eines E $^2$PROMs beinhaltet, in welchen vom Mikrorechner (76) aus Zustandsdaten, insbesondere Fehlerdaten, abspeicherbar sind.

16. Vorrichtung nach Anspruch 15,
**dadurch gekennzeichnet,**
daß das elektronische Bremssteuergerät (110) mit einer extern zugänglichen Diagnose-Schnittstelle (70) verbunden (104) ist, von der aus über eine mit dem Mikrorechner (76) des Bremssteuergeräts verbundene (102) Diagnosesteuereinrichtung (103) Diagnose- oder Fehlerdaten aus dem nichtflüchtigen Speicher (69) auslesbar sind.

17. Vorrichtung nach Anspruch 15,

**dadurch gekennzeichnet,**

daß der nichtflüchtige Speicher (69) von einem besonderen, ihm zugeordneten Mikrorechner im Bremssteuergerät (110) verwaltbar ist.

19. Vorrichtung nach Anspruch 17,

**dadurch gekennzeichnet,**

daß besagter besonderer Mikrorechner eine batteriegestützte Echtzeituhr umfaßt.

20. Vorrichtung nach Anspruch 15,

**dadurch gekennzeichnet,**

daß sie einen Gefahrenmelder (105) umfaßt, welcher mit dem Bremssteuergerät (110) verbunden (106, 107) ist und durch den eine Schalteinrichtung (108) steuerbar ist, welche mit dem nichtflüchtigen Speicher (69) in Verbindung (101) steht, und daß der nichtflüchtige Speicher als Datenlogger mit definierter Zeitbasis betreibbar ist.

20. Vorrichtung nach Anspruch 9,

**dadurch gekennzeichnet,**

daß das elektronische Bremssteuergerät (110) an eine Betriebsstromquelle (72a) und eine Hilfsstromquelle (72b) anschließbar ist, und daß bei Ausfall der Betriebsspannung ein Weiterbetrieb an der Hilfsspannung unterbrechungsfrei möglich ist.

21. Vorrichtung nach Anspruch 9,

**dadurch gekennzeichnet,**

daß zusätzlich jeder Radbremse (17 bis 22) ein Bremsbelagsverschleißsensor (53 bis 58) zugeordnet und dieser mit dem Bremssteuergerät (110) verbunden ist.

22. Vorrichtung nach Anspruch 9,

**dadurch gekennzeichnet,**

daß besagte Schnittstelle (74) Mittel zur Versorgung angeschlossener Geber (41 bis 58) mit Betriebsstrom oder elektromagnetischer Betriebsenergie umfaßt.

23. Vorrichtung nach Anspruch 9,

**dadurch gekennzeichnet,**

daß die Einsteuerung von Druckmittel in die Radbremszylinder auf einem Hauptweg (I) und einem Nebenweg (II) über Radbremsventile (1) erfolgt, die im wesentlichen jeweils aus einem elektrischen Druckverhältnisventil und einem vorgesteuerten 2/3-Wege Schaltventil bestehen.

Fig. 1a

Fig. 1b

Fig. 2

Fig. 3